# EUROPÄISCHE PATENTSCHRIFT

(11) **EP 3 775 535 B1**
(45) Veröffentlichungstag und Bekanntmachung des Hinweises auf die Patenterteilung: **09.11.2022**
(21) Anmeldenummer: 19723355.4
(22) Anmeldetag: 07.05.2019
(51) Int. Cl.: F03D 7/02, F16C 41/00, F03D 1/06, F16C 19/38, F03D 80/70

(54) **GROSSWÄLZLAGER**
LARGE ROLLING BEARING
PALIER À ROULEMENT DE GRANDE DIMENSION

(30) Priorität: 07.05.2018 DE 102018110925
(43) Veröffentlichungstag der Anmeldung: 17.02.2021
(73) Patentinhaber: Liebherr-Components Biberach GmbH, 88400 Biberach/Riss (DE)
(72) Erfinder: DAHL, Martin, 5430 Wettingen (CH); KREINER, Stephan, 89077 Ulm (DE); SCHUSTER, Markus, 87724 Ottobeuren (DE); SCHULZE, Thomas, 88400 Biberach (DE); GRANER, Klaus, 88400 Biberach an der Riß (DE); PALMER, Andreas, 88499 Riedlingen (DE)
(74) Vertreter: Thoma, Michael
(86) Internationale Anmeldenummer: PCT/EP2019/061659
(87) Internationale Veröffentlichungsnummer: WO 2019/215133

(56) Entgegenhaltungen:
- EP-A1- 2 886 858
- DE-A1-102005 026 141
- US-A- 2 954 830
- US-A1- 2014 056 709

## Beschreibung

Die vorliegende Erfindung betrifft ein Großwälzlager mit einem Stellantrieb zum Verstellen der rotatorischen Stellung des Großwälzlagers, das zumindest zwei zueinander verdrehbare Lagerringe umfasst, mit einem Stellaktor zum Verdrehen der beiden Lagerringe zueinander.

Ein Großwälzlager mit einem solchen Stellantrieb ist beispielsweise aus der Schrift US 2014/056709 A1 bekannt, wobei an einem der Lagerringe ein Ringkanalzylinder vorgesehen ist, in dem ein Kolben verschieblich aufgenommen ist.

Bezüglich der Verstellung der rotatorischen Stellung der Lagerringe von Großwälzlagern bzw. der daran angebauten Systemkomponenten haben sich in der Industrie im wesentlichen zwei Lösungen durchgesetzt. Zum einen ist dies die elektrische Verstellung mittels E-Motor, Getriebe und Zahnkranz am Lager. Zum anderen ist dies die hydraulische Verstellung mittels einem oder zwei Zylindern, die sich an einem Lagerring oder der Anschlusskonstruktion abstützen und die über eine oder mehrere Kolbenstange(n) exzentrisch auf eine Scheibe drücken, die mit dem anderen Lagerring verbunden ist.

Bei den aktuellen Lösungen mit Zylinder ist das erzeugte Verstellmoment nicht konstant, da sich der Hebelarm mit dem Schwenkwinkel ändert. Des Weiteren ist die Zylinderkraft beim klassischen Differentialzylinder richtungsabhängig, da die Kolbenfläche und die Kolbenstangenfläche unterschiedlich groß sind.

Solche Stellantriebe werden beispielsweise bei modernen Windkraftanlagen eingesetzt, bei denen die Rotorblätter um die Rotorblätterlängsachse jeweils mittels eines Großwälzlagers verdrehbar an der Rotornabe gelagert sind, um den Anstellwinkel der Rotorblätter je nach Windgeschwindigkeit variieren zu können. Dieser Pitchwinkel, d.h. der Anstellwinkel um die Rotorblattlängsachse, kann dabei in der genannten Weise elektrisch eingestellt werden, wobei bei einer elektrischen Pitchverstellung ein Elektromotor, ein Getriebe und ein Zahnkranz am Wälzlager angebracht sind. Das vom Elektromotor angetriebene Ritzel kämmt mit dem Zahnkranz, um auf diese Weise die beiden Lagerringe zueinander zu verdrehen und hierdurch den Pitchwinkel einzustellen.

Andererseits ist es auch bekannt, den Pitchwinkel hydraulisch zu verstellen. Hierbei sind ein oder zwei Hydraulikzylinder vorgesehen, die sich an der Nabe oder am Lagerring abstützen, der mit der Nabe verbunden ist, wobei die Kolbenstangen exzentrisch an einer Scheibe angelenkt sind, die mit dem Rotorblatt über den zweiten Lagerring verbunden ist, so dass durch Einfahren und Ausfahren der Kolbenstange eine Verdrehung der beiden Lagerringe und dadurch eine Einstellung des Pitchwinkels erreicht wird.

Da solche Stellantriebe für die Einstellung beispielsweise des Pitchwinkels, aber auch in anderen Anwendungen oft über längere Zeit in derselben Stellung verharren und die Lagerringe, bspw. das Rotorblatt, im einmal eingestellten Drehwinkel halten, unterliegen die Stellantriebe besonderen Anforderungen. Beispielsweise geben sich bei den genannten elektrischen Pitchverstellungen Schmierungsprobleme, da sich das Ritzel gegenüber dem Zahnkranz oft längere Zeit nicht bewegt und Schmierstoff nicht verteilen kann. Bei den genannten hydraulischen Pitchverstellungen ist das erzeugte Verstellmoment üblicherweise nicht konstant und auch richtungsabhängig, da sich einerseits der Hebelarm des Hydraulikzylinders bzw. dessen Kolbenstange mit dem Schwenkwinkel ändert, und andererseits, wie erwähnt, die Kolbenfläche und die Kolbenstangenfläche unterschiedlich groß sind. Insofern wurde bereits angedacht, zur Kompensation der unterschiedlichen Stellkräfte den Hydraulikdruck entsprechend zu steuern, was jedoch recht aufwändig ist.

Neben den genannten Problemen kommt bei Großwälzlagern als spezielle Problematik hinzu, dass der Aufwand zur Demontage besonders groß und das Handling hierbei schwierig ist. Solche Großwälzlager haben Lagerringe mit Durchmessern von mehr als 1m und oft auch von mehreren Metern, so dass allein das Gewicht des Großwälzlagers selbst beim Handling schon eine Herausforderung darstellt. Beim Beispiel einer Windenergieanlage, bei der die Rotorblätter über Großwälzlager drehbar an der Nabe montiert sind, ist im Fehlerfall nicht nur der Aufwand sehr groß, das Lager zu demontieren, sondern auch das Handling der dabei abzubauenden Rotorblätter bei der Demontage und Wiedermontage sehr schwierig.

Dabei ist auch der Tausch von Teilkomponenten des Großwälzlagers und des Stellantriebs, im Speziellen der Dichtungen, problematisch. Hilfreich wäre es, einen solchen Teilkomponententausch möglichst ohne Demontage des Großwälzlagers zu ermöglichen.

Ferner ist es auch problemtisch, dass die Wälzkörper eines Großwälzlagers im Laufe der Lebensdauer verschleißen. Dies führt zu zusätzlichem Spiel zwischen Innen- und Außenring des Großwälzlagers und stellt eine besondere Herausforderung für die Funktion der Teilkomponenten des Großwälzlagers dar. Die Bewegungen der Lagerringe zueinander infolge dieses Spiels müssen von den Komponenten, die mit beiden Lagerringen in Eingriff stehen, ertragen werden. Insbesondere kann dies zur sehr schnellen Zerstörung der genannten Teilkomponenten wie der Dichtungen führen.

Der vorliegenden Erfindung liegt die Aufgabe zugrunde, ein Großwälzlager mit einem verbesserten Stellantrieb zu schaffen, das Nachteile des Standes der Technik vermeiden und Letzteren in vorteilhafter Weise weiterbilden kann. Insbesondere soll ein kompakt bauender, wartungsfreundlicher Stellantrieb für ein Großwälzlager geschaffen werden, der ohne komplette Demontage des Großwälzlagers eine Wartung von Teilkomponenten ermöglicht, resistent gegen Verschleiß der Wälzkörper und dadurch entstehendes Spiel ist und dabei richtungsunabhängig gleich große, konstante Stellmomente erzielen kann, ohne hierfür eine aufwändige Drucksteuerung zu benötigen.

Erfindungsgemäß wird die genannte Aufgabe durch ein Großwälzlagerb gemäß Anspruch 1 gelöst. Bevorzugte Ausgestaltungen der Erfindung sind Gegenstand der abhängigen Ansprüche.

Es wird also vorgeschlagen, den Stellantrieb in das Großwälzlager zu integrieren und den Kolben des Stellantriebs in einen Ringkanal in oder an einem der Lagerringe zu verlegen, so dass der Kolben auf einer kreisbogenförmigen Bahn und somit ohne Veränderung des Hebelarms verstellt werden kann. Erfindungsgemäß umfasst der Stellantrieb einen Ringkanalzylinder, der in oder an einem der Lagerringe ausgebildet ist, sowie zumindest einen Kolben, der in dem Ringkanalzylinder verschieblich aufgenommen und mit dem anderen der beiden Lagerringe antriebsverbunden ist. Wird der Kolben in dem Ringkanalzylinder mit Druckmittel beaufschlagt, verfährt der Kolben in dem Ringkanalzylinder des einen Lagerrings und nimmt dabei über die genannte Antriebsverbindung den anderen Lagerring mit, so dass es zu einer Verdrehung der beiden Lagerringe und damit zu einer Verstellung des Pitchwinkels kommt. Dabei bleibt nicht nur der Hebelarm des Kolbens und damit das erzeugte Drehmoment konstant, sondern der Kolben kann auch auf gegenüberliegenden Seiten gleich große Kolbenflächen besitzen, so dass richtungsunabhängig die gleiche Stellkraft und damit das gleiche Verstellmoment erzeugt wird. Dabei führt der Kolben keine lineare Bewegung, sondern eine Bewegung auf einer Kurve mit konstantem Radius aus. Der Ringkanalzylinder ist aufgrund der Tatsache, dass der Kolben ohne Kolbenstange auskommen kann, ein Gleichgangzylinder. Somit gibt es kein Pendelvolumen und die Stellkraft des Ringkanalzylinders ist nicht richtungsabhängig.

Um den Ringkanal und/oder den darin laufenden Kolben vor Beschädigungen und Verschleiß zu schützen, die vom Verschleiß der Wälzkörper und damit einhergehendem Lagerspiel der Lagerringe des Großwälzlagers herrühren können, kann eine Entkopplung des Spiels von Innen- und Außenring des Großwälzlagers zu mindestens einer Hälfte des Ringkanalzylinders vorgesehen werden. Insbesondere kann die Antriebsverbindung des Kolbens zu dem Lagerring, zu dem der Kolben nicht verfahrbar ist bzw. der vom Kolben rotatorisch mitgenommen wird, nachgiebig und/oder lagerspielkompensierend ausgebildet sein, so dass die genannte Antriebsverbindung nicht die Lagerkräfte aufnehmen muß, wenn die Lagerringe Spiel zu einander haben..

Insbesondere kann die Antriebsverbindung des/r Kolben zum mitzunehmenden Lagerring in axialer Richtung beweglich und/oder nachgiebig, insbesondere spielbehaftet ausgebildet sein, um axiales Lagerspiel der Lagerringe des Großwälzlagers zumindest teilweise kompensieren zu können. Beweglich in axialer Richtung meint dabei eine Beweglichkeit parallel zur Drehachse des Großwälzlagers. Dies kann zum Beispiel durch einen oder mehrere Stifte realisiert werden, der/die sich jeweils in einer Bohrung in dem Mitnehmerring und/oder in dem mitgenommenen Lagerring axial bewegen kann/können. Eine weitere Möglichkeit ist eine Geradverzahnung, durch die axiale Beweglichkeit erzielt werden kann.

Alternativ oder zusätzlich kann die genannte Antriebsverbindung in radialer Richtung beweglich und/oder nachgiebig, insbesondere spielbehaftet sein, um radiales Lagerspiel der Lagerringe des Großwälzlagers zumindest teilweise kompensieren zu können. Beweglich in radialer Richtung meint dabei eine Beweglichkeit senkrecht zur Drehachse des Großwälzlagers. Dies kann zum Beispiel bei einer Stiftverbindung durch radiale Langlöcher realisiert werden, in denen die Stifte radial beweglich sind. Solche Langlöcher können in dem Mitnehmerring und/oder in dem mitgenommenen Lagerring vorgesehen sein. Ebenso kann eine Verzahnung vorgesehen und derart gefertigt sein, dass ein radiales Verzahnungsspiel ermöglicht ist und radiales Spiel der Lagerringe zumindest teilweise kompensieren kann.

Die genannte Antriebsverbindung kann am gesamten Umfang oder nur in Teilbereichen vorgesehen sein. Beispielsweise kann der genannte Mitnehmerring umfangsseitig radial vorspringende Abschnitte aufweisen, an denen die Verbindungsmittel zum mitzunehmenden Lagerring angebracht werden. Vorteilhafterweise sind die Abschnitte, an denen die Verbindungsmittel zum mitzunehmenden Lagerring angebracht sind, in Umfangsrichtung an den Sektoren bzw. Ringabschnitten angebracht, an denen die Kolben sitzen und mit dem Mitnehmerring verbunden sind.

Die genannte Antriebsverbindung ist vorteilhafterweise in Umfangsrichtung form- und/oder kraftschlüssig realisiert, bspw. mittels Stiftverbindungen und/oder Verzahnungen und/oder Nutverbindungen.

Vorteilhafterweise ist die genannte Antriebsverbindung in Umfangsrichtung im wesentlichen spielfrei ausgebildet, um ein exaktes Einstellen und/oder Halten eines gewünschten Drehwinkels des Großwälzlagers erzielen zu können.

Vorteilhafterweise können mehrere Kolben vorgesehen und jeweils in einem Ringkanalzylinder aufgenommen sein, wobei die mehreren Kolben mit dem jeweils anderen Lagerring antriebsverbunden sein können. Durch solche mehreren Kolben können mit relativ kleinen Kolbendurchmessern relativ hohe Stellkräfte erzeugt werden.

Durch die Verwendung von mehreren Kolben im Ringkanal kann der Kolbendurchmesser verkleinert werden und somit auch die vom Druck beaufschlagte Fläche, die maßgebend für die Kraft ist, die die Schalen des Ringkanalzylinders auseinanderdrückt.

Um besonders kompakt zu bauen, können die mehreren Kolben in demselben Ringkanalzylinder bzw. in verschiedenen Sektionen des gemeinsamen Ringkanalzylinders aufgenommen sein. Die Sektionen des Ringkanalzylinders können hierbei durch Trennwandungen voneinander abgetrennt sein, so dass sich der Druck, der den Kolben verschiebt, an den Trennwänden abstützen kann.

Alternativ wäre es aber auch möglich, mehrere Ringkanalzylinder in/an einem oder auch beiden Lagerringen vorzusehen, so dass jeder Kolben oder jede Kolbengruppe ihren eigenen Ringkanalzylinder hat. Im Sinne einer einfachen, kompakten und Platz sparenden Bauweise kann jedoch ein Ringkanalzylinder ausreichend sein, in dem mehreren Kolben laufen können.

Um eine einfache Wartung des Ringkanalzylinders zu ermöglichen, kann der Ringkanal bzw. der den Ringkanal umgebende Ring- und/oder Zylinderkorpus geteilt ausgeführt sein. Insbesondere kann der Ringkanal im Querschnitt betrachtet etwa mittig geteilt sein, so dass ein in den Ringkanal eingesetzter Kolben aus beiden Ringkanalteilen quer zur Kolben- und/oder Ringkanallängsachse herausgenommen werden kann, ohne an hinterschnittenen Rändern der Ringkanalteile festzustecken. Der Ringkanal- und/oder Zylinderkorpus kann in zwei Halbringe geteilt sein, die jeweils eine ringförmige Nut aufweisen und im aneinandergesetzten Zustand gemeinsam den Ringkanal bilden.

Vorteilhafterweise besitzt der den Ringkanal umgebende Ringkanalkorpus, in dem der Ringkanal ausgebildet ist, eine Teilungsebene parallel zur Umlaufbahn des Kolbens und/oder im wesentlichen senkrecht zur Drehachse des Großwälzlagers. Hierdurch läßt sich der Ringkanalzylinder besonders einfach demontieren.

Eines der Ringkanalteile kann dabei in einen der beiden Lagerringe des Großwälzlagers integriert sein, bspw. indem der jeweilige Lagerring an einer Wandungsseite eine darin eingeabeitete Nut aufweist. Alternativ kann das genannte Ringkanalteil aber auch als separater Ring auf den Lagerring geschraubt oder daran in anderer Weise vorzugsweise kraft- und/oder formschlüssig fixiert werden.

Vorteilhafterweise kann der genannte Ringkanalteil bzw. der gesamte Ringkanal an einer axialen Stirnseite des jeweiligen Lagerrings angeordnet sein. Eine Anordnung an einer Mantelfläche des Lagerrings käme zwar auch in Betracht, jedoch ist eine axialstirnseitige Anordnung einfach zu erreichen und zu demontieren und ermöglicht eine einfache Anbindung des Kolbens an den anderen Lagerring des Großwälzlagers.

Der andere Ringkanalteil bzw. die zweite Hälfte des Ringkanalkorpus kann vorteilhafterweise ein zusätzliches, separates Teil bspw. in Form eines Ringkanaldeckels sein, welches mit dem Lagerring und/oder dem erstgenannten Ringkanalteil vorteilhafterweise lösbar, vorzugsweise über eine zusätzliche Verschraubung, verbunden wird, wobei die Verbindung form- und/oder kraftschlüssig sein kann. Dabei ist es vorteilhaft, wenn sich der Ringkanaldeckel über die Lagerverschraubung am Lagerring abstützt, um die Biegebeanspruchung in der zusätzlichen Verschraubung möglichst gering zu halten.

Vorteilhafterweise ist der Ringkanal derart ausgebildet und am Lagerring angebracht, dass im Servicefall der Ringkanalzylinder demontiert werden kann, ohne die Lagerverschraubungen zu lösen. Es können dann bspw. umlaufenden Dichtungen am Ringkanal und/oder Kolbendichtungen und/oder die Kolben selber gewechselt werden.

Um eine einfache Demontage des Ringkanaldeckels bzw. des separierbaren Ringkanalteils und des zumindest einen Kolbens zu ermöglichen, kann der Kolben lösbar mit einem Mitnehmerring verbunden sein, vorzugsweise mittels einer Verschraubung und/oder Verstiftung und/oder Verzahnung. Unabhägig von der Lösbarkeit kann die Verbindung zwischen Kolben und Mitnehmerring vorteilhafterweise form- und/oder kraftschlüssig sein, wobei grundsätzlich aber auch eine stoffschlüssige Verbindung in Betracht käme.

Die form- und/oder kraftschlüssigen Verbindungsmittel können dabei vorteilhafterweise derart ausgebildet sein, dass sie sich in einer Richtung im wesentlichen senkrecht zur genannten Teilungsebene zwischen den Ringkanalteilen und/oder parallel zur Fügerichtung der beiden Ringkanalteile lösen bzw. zusammenfügen lassen. Kann bspw. der genannte Ringkanaldeckel in einer Richtung parallel zur Drehachse des Großwälzlagers abgenommen werden, kann es vorteilhaft sein, wenn sich auch die form- und/oder kraftschlüssigen Verbindungsmittel zwischen Kolben und Mitnehmerring parallel zur Drehachse des Großwälzlagers lösen und umgekehrt wieder in Eingriff bringen lassen. Beispielsweise können Stifte als Verbinder vorgesehen sein, die sich mit ihren Längsachsen parallel zur Drehachse des Großwälzlagers erstrecken, alternativ kann eine Verzahnung vorgesehen sein, deren Zahnflanken sich näherungsweise parallel zur Drehachse des Großwälzlagers erstrecken.

Die beiden Lagerringe des Großwälzlagers sind vorteilhafterweise durch zumindest zwei Axialwälzlagerreihen gegeneinander abgestützt, wobei die Axialwälzlagerreihen vorteilhafterweise auf gegenüberliegenden Seiten eines Ringabschnitts bzw. einer Ringnase angeordnet sein können, so dass die beiden Lagerringe gegeneinander in beide Axialrichtungen abgestützt sind, d.h. bei aufrechter Anordnung der Drehachse des Lagers ist der eine Lagerring sowohl nach unten als auch nach oben am anderen Lagerring abgestützt. Der eine Lagerring kann sozusagen zwischen den beiden Axialwälzlagern eingespannt sein.

In vorteilhafter Weiterbildung der Erfindung kann der zumindest eine Ringkanalzylinder - im Querschnitt des Großwälzlagers betrachtet - nicht zwischen, sondern axial außerhalb bzw. auf einer Seite von den beiden bzw. von allen Axialwälzlagerreihen angeordnet sein. Bei aufrechter Anordnung der Lagerdrehachse können beide bzw. alle Axiallager oberhalb des Ringkanalzylinders oder alle Axiallager unterhalb des Ringkanalzylinders angeordnet sein. Durch eine Anordnung des Ringkanalzylinders ausserhalb des Bereichs, in den die Wälzkörper den übertragenen Kraftfluß in die Lagerringe einleiten, wird der Ringkanalzylinder weniger den Lagerkräften ausgesetzt.

Unabhängig hiervon kann eine Querschnittsüberlappung zwischen den Axialwälzlagern einerseits und dem Ringkanalzylinder andererseits vorgesehen sein. Legt man im Querschnitt betrachtet eine Gerade durch den Ringkanalzylinder, die sich parallel zur Lagerdrehachse erstreckt, trifft die besagte Gerade zumindest auf eines der genannten Axiallager.

Andererseits kann zwischen den Axiallagern einerseits und dem Ringkanalzylinder andererseits durchaus ein gewisser Durchmesserversatz sinnvoll sein. Betrachtet man die mittleren Durchmesser der Axialwälzlagerreihen und des Ringkanalzylinders, können diese unterschiedlich groß bemessen sein, beispielsweise dergestalt, dass der mittlere Durchmesser des Ringkanalzylinders etwa dem äußeren Durchmesser der Axialwälzlagerreihen oder dem inneren Durchmesser der Axialwälzlagerreihen entspricht, je nachdem, ob der Ringkanalzylinder im Innenring oder im Außenring vorgesehen ist.

In Weiterbildung der Erfindung kann der Ringkanalzylinder am/im Innenring ausgebildet sein. Grundsätzlich wäre es aber auch möglich, den Ringkanalzylinder am/im Außenring vorzusehen.

Die beiden vorgenannten Axialwälzlager können im Wesentlichen denselben Durchmesser besitzen.

Zusätzlich zu den genannten Axialwälzlagern können die beiden Lagerringe vorteilhafterweise auch durch zumindest eine Radialwälzlagerreihe gegeneinander abgestützt sein, wobei die genannte Radialwälzlagerreihe vorteilhafterweise zwischen den beiden Axialwälzlagerreihen angeordnet sein kann.

Insbesondere kann das genannte, zumindest eine Radiallager in einem Durchmesserbereich angeordnet sein, der sich mit dem Durchmesserbereich des Ringkanals zumindest teilweise überdeckt oder dazu benachbart ist oder sich daran anschließt. Vorteilhafterweise kann der Durchmesserbereich des Radiallagers 75% bis 125% oder 85% bis 115% des Durchmesserbereichs des Ringkanals betragen.

Der den Ringkanalzylinder aufweisende Lagerring kann vorteilhafterweise zwei- oder mehrgeteilt ausgebildet sein. Alternativ oder zusätzlich kann auch der vom Kolben mitzunehmende andere Lagerring geteilt ausgebildet sein. Insbesondere kann der geteilte Lagerring in einer Ebene im Wesentlichen senkrecht zur Drehachse des Großwälzlagers geteilt sein.

Der vorgenannte Mitnehmer kann sich im Wesentlichen radial von dem Ringkanalzylinder ausgehend aus dem Ringkanalkorpus heraus erstrecken und/oder über den genannten Lagerring radial vorstehen, um mit dem anderen Lagerring antriebsverbunden zu sein. Ist der Ringkanalzylinder im Innenring vorgesehen, kann sich der genannte Mitnehmer radial nach außen zum Außenring hin erstrecken.

Um den Ringkanalzylinder abzudichten, können zwischen den beiden Lagerringteilen verschiedene Dichtungen vorgesehen sein. Insbesondere kann auf einer Seite des Ringkanalzylinders eine statische Dichtung vorgesehen sein und/oder auf einer anderen Seite des Ringkanalzylinders eine oder mehrere Gleitdichtungen vorgesehen sein können, die die Lagerringteile gegen den genannten Mitnehmer abdichten.

Vorteilhafterweise können die genannten Dichtungen axial arbeitend ausgebildet sein, d.h. in axialer Richtung auf sich radial erstreckende Dichtflächen pressen.

Die Erfindung wird nachfolgend anhand eines bevorzugten Ausführungsbeispiels und zugehöriger Zeichnungen näher erläutert. In den Zeichnungen zeigen:
- Fig. 1:: eine Schnittansicht eines Stellantriebs durch die beiden Lagerringe des Großwälzlagers nach einer vorteilhaften Ausführung der Erfindung, die die Anordnung der Wälzlagerreihen und des Ringkanalzylinders sowie der Dichtungen zum Abdichten des Ringkanalzylinders zeigt,
- Fig. 2:: eine Draufsicht auf das Großwälzlager aus Fig. 1,
- Fig. 3:: eine schematische Frontansicht einer Windkraftanlage, an deren Rotornabe mehrere Rotorblätter in ihrem Pitchwinkel verstellbar angeordnet sind, wobei die Rotorblätter jeweils mittels eines Großwälzlagers gem. Fig. 1 und 2 an der jeweiligen Rotornabe drehbar gelagert sind und mittels des in das Großwälzlager integrierten Stellantriebs im Pitchwinkel eingestellt werden können.

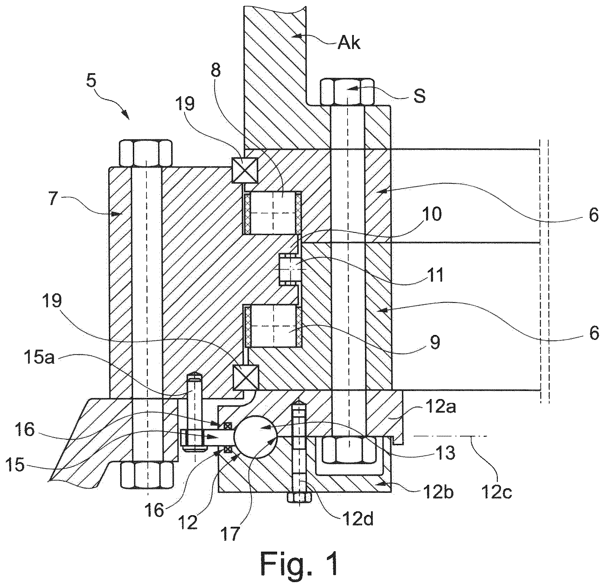

Wie Fig. 1 zeigt, umfaßt das Großwälzlager 5 zwei Lagerringe 6 und 7, die konzentrisch zueinander angeordnet und gegeneinander verdrehbar sind.

Vorteilhafterweise können die beiden Lagerringe 6 und 7 durch mehrere Wälzlagerreihen gegeneinander verdrehbar abgestützt sein. Vorteilhafterweise sind dabei einerseits zwei Axialwälzlagerreihen 8 und 9 vorgesehen, die beispielsweise als Zylinderrollenlager ausgebildet sein können.

Die beiden Axialwälzlagerreihen 8 und 9 stützen die beiden Lagerringe 6 und 7 in gegenläufige Richtungen aneinander ab. Insbesondere kann einer der Lagerringe - beispielsweise der Außenring 7 - eine zum anderen Lagerring 6 hin vorspringende Ringnase 10 aufweisen, die durch die beiden Axialwälzlagerreihen 8 und 9 am anderen Lagerring 6 axial eingespannt bzw. in gegenläufige Richtungen abgestützt ist. Der andere Lagerring 6 kann hierzu eine Ringnut aufweisen, in die die genannte Ringnase 10 eingreift.

Ferner können die beiden Lagerringe 6 und 7 durch zumindest eine Radialwälzlagerreihe 11 gegeneinander abgestützt sein, die beispielsweise ebenfalls als Zylinderrollenlager ausgebildet sein kann.

Anstelle der gezeigten einreihigen Wälzlager können auch mehrreihige Wälzlager vorgesehen sein.

Wie Fig. 1 zeigt, kann das Radialwälzlager 11 vorteilhafterweise zwischen den beiden Axialwälzlagern 8 und 9 angeordnet sein, insbesondere im Spalt zwischen der vorgenannten Ringnase 10 und der die Ringnase 10 aufnehmenden Ringnut.

Wie die Figur 1 zeigt, ist einer der Lagerringe, insbesondere der innere Lagerring 6, mit einem Ringkanalzylinder 12 versehen, der kreisbogenförmig an einer axialen Stirnseite, bspw. der unteren Stirnseite, des Lagerrings 6 verläuft und einen Druckmittelzylinder bildet, in dem ein oder mehrere Kolben 13, 14 verschieblich aufgenommen sind. Vorteilhafterweise ist der Ringkanal 12 auf der Stirnseite des Lagerrings 6 angeordnet, die der an diesem Lagerring 6 befestigten Anschlußkonstruktion AK bzw. der Stirnseite, an der die Anschlußkonstruktion AK am Lagerring 6 befestigt ist, gegenüberliegt, vgl. Fig. 1.

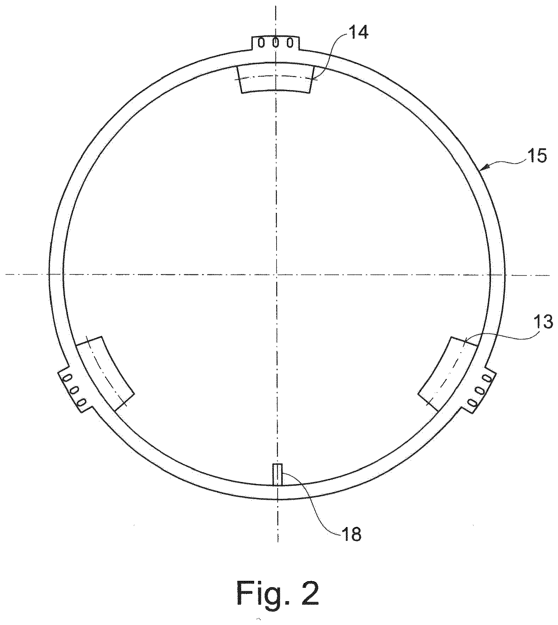

Wie die Fig. 2 andeutet, kann der Kolben 13 und 14 ebenfalls leicht kreisbogenförmig gekrümmt sein bzw. eine eicht kreisbogenförmig gekrümmte Längsachse besitzen, um sanft und widerstandslos entlang der kreisbogenförmig gekrümmten Ringkanalzylinderkontur gleiten zu können.

Wie Fig. 1 zeigt, kann der den Ringkanalzylinder 12 aufweisende Lagerring 6 zwei- oder mehrgeteilt ausgebildet sein, wobei sich die Trennebene durch die Nut hindurch erstrecken kann, in der die am anderen Ring vorgesehene Ringnase eingreift, die durch die beiden Axialwälzlager 8, 9 abgestützt ist. Die beiden Lagerringteile können axial durch Schraubbolzen S miteinander verschraubt sein.

Um eine einfache Wartung des Ringkanalzylinders zu ermöglichen, kann auch der Ringkanalzylinder 12 bzw. der den Ringkanal umgebende Ring- und/oder Zylinderkorpus 12a, 12b geteilt ausgeführt sein. Insbesondere kann der Ringkanal im Querschnitt betrachtet etwa mittig geteilt sein, so dass die in den Ringkanal eingesetzten Kolben 13, 14 aus beiden Ringkanalteilen quer herausgenommen werden können, ohne an hinterschnittenen Rändern festzustecken. Der Ringkanal- und/oder Zylinderkorpus kann in zwei Halbringe 12a, 12b geteilt sein, die jeweils eine ringförmige Nut aufweisen und im aneinandergesetzten Zustand gemeinsam den Ringkanal bilden.

Vorteilhafterweise besitzt der den Ringkanal umgebende Ringkorpus 12a, 12b, in dem der Ringkanal ausgebildet ist, eine Teilungsebene 12c parallel zur Umlaufbahn der Kolben 13, 14 und/oder im wesentlichen senkrecht zur Drehachse des Großwälzlagers. Hierdurch läßt sich der Ringkanalzylinder 12 besonders einfach demontieren.

Eines der Ringkanalteile 12a kann als separater Ring auf den Lagerring 6 geschraubt oder daran in anderer Weise fixiert werden, insbesondere an dessen Axialstirnseite wie erläutert.

Der andere Ringkanalkorpusteil 12b bzw. die zweite Hälfte kann vorteilhafterweise ein zusätzliches, separates Teil in Form eines Ringkanaldeckels sein, welches mit dem Lagerring 6 und/oder dem erstgenannten Ringkanalteil 12a vorteilhafterweise lösbar, vorzugsweise über eine zusätzliche Verschraubung 12d verbunden wird. Dabei ist es vorteilhaft, wenn sich der Ringkanaldeckel 12b über die Lagerverschraubung am Lagerring 6 abstützt, vgl. Fig. 1, um die Biegebeanspruchung an der zusätzlichen Verschraubung möglichst gering zu halten.

Vorteilhafterweise kann im Servicefall der Ringkanalzylinder 12 demontiert werden, ohne die Lagerverschraubungen S zu lösen. Es können dann bspw. umlaufenden Dichtungen am Ringkanal und/oder Kolbendichtungen und/oder die Kolben 13, 14 selber gewechselt werden.

Um eine einfache Demontage des Ringkanaldeckels 12b bzw. des separierbaren Ringkanalteils und der Kolben 13, 14 zu ermöglichen, können die Kolben 13, 14 form- und/oder kraftschlüssig mit einem Mitnehmerring 15 verbunden sein, vorzugsweise mittels einer Verschraubung und/oder Verstiftung und/oder Verzahnung.

Um den Ringkanal und/oder die darin laufenden Kolben 13, 14 vor Beeinträchtigungen infolge Verschleiß der Wälzkörper und damit einhergehendem Lagerspiel der Lagerringe 6, 7 des Großwälzlagers 5 zu schützen, kann eine Entkopplung des Spiels von Innen- und Außenring 6, 7 des Großwälzlagers 5 zu mindestens einer Hälfte des Ringkanalzylinders vorgesehen werden. Insbesondere kann die Antriebsverbindung der Kolben 13, 14 zu dem Lagerring 7, zu dem die Kolben 13, 14 nicht verfahrbar sind bzw. der von den Kolben 13, 14 rotatorisch mitgenommen werden, nachgiebig und/oder lagerspielkompensierend ausgebildet sein. Die Antriebsverbindung kann dabei im Bereich des genannten Mitnehmers 15 und/oder dessen Anbindung an den mitzunehmenden Lagerring 7 und/oder an die Kolben 13, 14 solchermaßen nachgiebig und/oder lagerspielkompensierend ausgebildet sein.

Insbesondere kann die Antriebsverbindung der Kolben 13, 14 zum mitzunehmenden Lagerring 7 in axialer Richtung beweglich und/oder nachgiebig, insbesondere spielbehaftet ausgebildet sein, um axiales Lagerspiel der Lagerringe 6, 7 des Großwälzlagers 5 zumindest teilweise kompensieren zu können. Dies kann zum Beispiel durch einen oder mehrere Stifte 15a realisiert werden, der/die sich jeweils in einer Bohrung in dem Mitnehmerring 15 und/oder in dem mitgenommenen Lagerring 7 axial bewegen kann/können. Eine weitere Möglichkeit ist eine Geradverzahnung, durch die die gewünschte axiale Beweglichkeit erzielt werden kann.

Alternativ oder zusätzlich kann die genannte Antriebsverbindung in radialer Richtung beweglich und/oder nachgiebig, insbesondere spielbehaftet sein, um radiales Lagerspiel der Lagerringe 6, 7 des Großwälzlagers 5 zumindest teilweise kompensieren zu können. Dies kann zum Beispiel bei einer Stiftverbindung durch radiale Langlöcher realisiert werden, in denen die Stifte 15a radial beweglich sind. Solche Langlöcher können in dem Mitnehmerring 15 und/oder in dem mitgenommenen Lagerring 7 vorgesehen sein. Ebenso kann eine Verzahnung vorgesehen und derart gefertigt sein, dass ein radiales Spiel ermöglicht ist.

Wie Fig. 1 zeigt, kann der zumindest eine Ringkanalzylinder 12 - im Querschnitt des Großwälzlagers 5 betrachtet - nicht zwischen, sondern axial außerhalb bzw. auf einer Seite von den beiden bzw. von allen Axialwälzlagerreihen 8, 9 angeordnet sein. Bei aufrechter Anordnung der Lagerdrehachse können beide bzw. alle Axiallager 8, 9 oberhalb des Ringkanalzylinders 12 oder alle Axiallager 8, 9 unterhalb des Ringkanalzylinders 12 angeordnet sein.

Unabhängig hiervon kann eine Querschnittsüberlappung zwischen den Axialwälzlagern 8, 9 einerseits und dem Ringkanalzylinder 12 andererseits vorgesehen sein. Legt man im Querschnitt betrachtet eine Gerade durch den Ringkanalzylinder 12, die sich parallel zur Lagerdrehachse erstreckt, trifft die besagte Gerade zumindest auf eines der genannten Axiallager 8, 9.

Zu dem anderen Lagerring 7 hin ist der Ringkanalzylinder 12 nicht gänzlich geschlossen, sondern es ist ein sich radial erstreckender Spalt vorgesehen, in dem der genannte Mitnehmer 15 angeordnet ist, der sich von dem Ringkanalzylinder 12 ausgehend aus diesem heraus bzw. über den Lagerring 6 radial hinausragend zum anderen Lagerring 7 hin erstreckt. Der genannte Mitnehmer 15 kann plattenförmig ausgebildet sein und passgenau in dem Spalt zwischen den beiden Ringkanalkorpusteilen 12a und 12b sitzen, so dass der Ringkanalzylinder 12 durch den Mitnehmer 15 auch nach innen hin abgedichtet werden kann.

Wie Fig. 1 zeigt, können an den beiden Ringkanalkorpusteilen 12a und 12b Gleitdichtungen 16 vorgesehen sein, die die Ringkanalkorpusteile 12a und 12b zu dem genannten Mitnehmer 15 hin abdichten. Auf einer anderen Seite des Ringkanalzylinders 12 kann ferner eine statische Dichtung 17 vorgesehen sein, die den Ringkanalzylinder 12 in der Trennebene der beiden Ringkanalkorpusteile 12a und 12b abdichtet.

Die genannten Dichtungen 16 und 17 können axial arbeitend ausgebildet sein und ihre Dichtwirkung entfalten, wenn die beiden Ringkanalkorpusteile 12a und 12b axial gegeneinander gespannt werden, beispielsweise durch entsprechende Spannbolzen.

Wie Fig. 1 weiterhin zeigt, können weitere Dichtungen 19 zwischen den Lagerringen 6, 7 vorgesehen sein, um den Lagerspalt zwischen den beiden Lagerringen 6, 7, in dem die Wälzlagerreihen 8, 9, 11 sitzen, abzudichten. Der erläuterte Ringkanalzylinder 12 ist vorteilhafterweise außerhalb des von den Dichtungen 19 abgedichteten Lagerspalts angeordnet, so das der Ringkanalzylinder zugänglich und demontierbar ist, ohne die Dichtungen 19 demontieren zu müssen.

Wie Fig. 2 andeutet, sitzen in dem Ringkanalzylinder 12 weiterhin Trennkolben 18 bzw. Trennwandungen, die den Ringkanalzylinder 12 in mehrere Ringkanalzylindersektionen unterteilen. Gegen die genannten Trennkolben bzw. - wandungen 18 stützt sich der Druck ab, der zum Verfahren der Kolben 13 und 14 dient.

Die genannten Trennkolben bzw. -wandungen 18 können mit einem Druckmittelzulauf und/oder Druckmittelablauf versehen sein, um Druckmittel in die Sektionen des Ringkanalzylinders einleiten und ableiten zu können.

Alternativ oder zusätzlich können ein Druckmittelzulauf und/oder ein Druckmittelablauf auch in dem Mitnehmer 15 und/oder in einem der Ringkanalzylinderkorpus-Teile 12a, 12b, vorteilhafterweise in dem genannten Ringkanaldeckel 12b, vorgesehen sein, um Druckmittel den Ringkanalzylinder 12 bzw. in die Sektionen des Ringkanalzylinders 12 einleiten und ableiten zu können

Wird beispielsweise Druckmittel in eine rechte Kammer zum Kolben 14 hin zugeführt, verfährt der genannte Kolben 14 nach links bzw. im Gegenuhrzeigersinn.

Über den Mitnehmer 15 nimmt er dabei den Außenring 7 mit, so dass die beiden Lagerringe 6 und 7 gegeneinander verdreht werden.

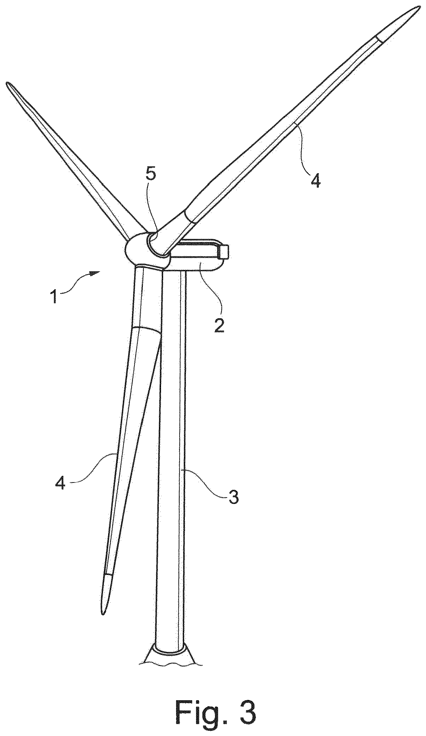

Der Stellantrieb bzw. das beschriebene Großwälzlager kann beispielswesie dazu verwendet werden, um die Rotorblätter einer Windkraftanlage an deren Rotornabe verstellbar zu lagern. Wie Fig. 3 zeigt, kann eine solche Windkraftanlage 1 in an sich bekannter Weise einen Turm 3 umfassen, auf dem eine Gondel 2 um eine aufrechte Achse drehbar angeordnet ist. In der genannten Gondel 2 können der Generator und andere Anlagenkomponenten aufgenommen sein.

An der Rotornabe sind mehrere Rotorblätter 4 angeordnet, die um ihre Längsachse verdrehbar, d.h. in ihrem Pitchwinkel veränderbar an der genannten Rotornabe gelagert sind.

Die genannten Rotorblätter 4 sind dabei durch ein Großwälzlager an der Rotornabe gelagert, wie es in den Figuren 1 und 2 dargestellt ist.

Der eine Lagerring ist dabei mit dem Rotorblatt 4 fest verbunden, während der andere Lagerring an der Rotornabe befestigt ist. Vorteilhafterweise kann dabei das Rotorblatt am Innenring 6 und die Rotornabe am Aussenring 7 befestigt werden, wobei grundsätzlich jedoch auch die umgekehrte Anordnung möglich ist.

Das Großwälzlager und der darin integrierte Stellantrieb können aber auch für andere zu verstellende Maschinenkomponenten verwendet werden, bspw. um den Oberwagen eines Krans oder Baggers gegenüber dessen Unterwagen verdrehen zu können.

## Patentansprüche

1. Großwälzlager (5) mit zumindest zwei zueinander verdrehbaren Lagerringen (6, 7), einem Stellantrieb zum Verstellen der rotatorischen Stellung der genannten zwei Lagerringe, zumindest einem Ringkanalzylinder (12), der in oder an einem der Lagerringe (6) ausgebildet und zumindest einmal am Umfang unterbrochen und beidseits der Unterbrechung mit einer Zuführung für Hydraulikflüssigkeit versehen ist, sowie zumindest einem Kolben (13), der in dem Ringkanalzylinder (12) verschieblich aufgenommen ist, **dadurch gekennzeichnet, dass** der genannte Kolben (13) mit dem anderen der beiden Lagerringe (7) über eine zumindest im Dichtspalt des Ringkanalzylinders (12) umlaufende Mitnehmerscheibe (15) antriebsverbunden ist, wobei die Mitnehmerscheibe (15) und/oder die Verbindung der Mitnehmerscheibe (15) zum mitzunehmenden Lagerring (7) in Umfangsrichtung im Wesentlichen spielfrei und in axialer und radialer Richtung beweglich und/oder nachgiebig, insbesondere spielbehaftet, ausgebildet ist.

2. Großwälzlager nach dem vorhergehenden Anspruch, wobei die genannte Verbindung eine Stiftverbindung mit am mitzunehmenden Lagerring (7) und/oder an der Mitnehmerscheibe (15) axial und/oder radial verschieblich geführten Stiften (15a) und/oder eine Verzahnung mit Radial- und/oder Axialspiel zwischen der Mitnehmerscheibe (15) und dem mitzunehmenden Lagerring (7) aufweist.

3. Großwälzlager nach einem der vorhergehenden Ansprüche, wobei der Ringkanalzylinder (12) stirnseitig auf einer Axialstirnseite eines der beiden Lagerringe (6) angeordnet ist.

4. Großwälzlager nach dem vorhergehenden Anspruch, wobei der den Ringkanalzylinder (12) umgebende Ringkanalzylinderkorpus (12a, 12b) zwei- oder mehrgeteilt ausgebildet ist und der Ringkanalzylinder (12) eine Teilungsebene im Wesentlichen parallel zur Umlaufbahn des zumindest einen Kolbens (13) aufweist, die im Querschnitt betrachtet etwa mittig durch den Ringkanal geht.

5. Großwälzlager nach dem vorhergehenden Anspruch, wobei eines der Ringkanalzylinderkorpusteile (12a) in einen der beiden Lagerringe (6) integriert oder als separater Ring an dem Lagerring (6) befestigt ist.

6. Großwälzlager nach einem der beiden vorhergehenden Ansprüche, wobei ein weiterer Ringkanalzylinderkorpusteil (12b) ein zusätzliches, separates Teil in Form eines Ringkanaldeckels bildet, welches mit dem Lagerring (6) und/oder dem erstgenannten Ringkanalteil (12a) lösbar, vorzugsweise über eine zusätzliche Verschraubung, verbunden ist.

7. Großwälzlager nach einem der vorhergehenden Ansprüche, wobei der Ringkanalzylinder (12) derart ausgebildet und am Lagerring (6) angebracht, dass im Servicefall der Ringkanalzylinder (12) zumindest teilweise demontierbar ist, ohne die Lagerringe (6, 7) voneinander zu lösen und/oder das Großwälzlager (5) von seiner Anbauumgebung zu lösen.

8. Großwälzlager nach einem der vorhergehenden Ansprüche, wobei die beiden Lagerringe (6, 7) durch zumindest zwei Axialwälzlager (8, 9) gegeneinander abgestützt sind, wobei im Querschnitt betrachtet die beiden Axialwälzlager (8, 9) auf derselben Seite des Ringkanalzylinders (12) angeordnet sind.

9. Großwälzlager nach dem vorhergehenden Anspruch, wobei der Ringkanalzylinder (12) und die Axiallager (8, 9) einander überlappende Durchmesserbereiche definieren.

10. Großwälzlager nach einem der vorhergehenden Ansprüche, wobei die beiden Lagerringe (6, 7) durch zumindest ein Radialwälzlager (11) gegeneinander abgestützt sind.

11. Großwälzlager nach dem vorhergehenden Anspruch, wobei das Radialwälzlager (11) zwischen den beiden Axialwälzlagern (8, 9) angeordnet ist.

12. Großwälzlager nach einem der beiden vorhergehenden Ansprüche, wobei das Radialwälzlager (11) in einem Durchmesserbereich angeordnet ist, der 75% bis 125% des Durchmesserbereichs des Ringkanals (12) beträgt.

13. Großwälzlager nach einem der vorhergehenden Ansprüche, wobei die Ringkanalzylinderteile (12a, 12b) auf einer Seite des Ringkanalzylinders (12) durch eine statische Dichtung (17) abgedichtet und auf einer anderen Seite des Ringkanalzylinders (12) durch eine Gleitdichtung gegen die Mitnehmerscheibe (15), der mit dem/n Kolben (13) verbunden ist, abgedichtet ist, wobei die statische Dichtung (17) und/oder die Gleitdichtung (18) axial wirkend ausgebildet sind.

14. Großwälzlager nach einem der vorhergehenden Ansprüche, wobei Dichtungen (19) zum Abdichten des Lagerspalts zwischen den beiden Lagerringen (6, 7), in dem die Wälzlagerreihen (8, 9, 11) sitzen, zwischen den Lagerringen 6, 7 vorgesehen sind, wobei der genannte Ringkanalzylinder (12) außerhalb des von den Dichtungen (19) abgedichteten Lagerspalts angeordnet ist, so dass der Ringkanalzylinder (12) ohne Demontage der Dichtungen (19) zugänglich und demontierbar ist.

15. Windkraftanlage mit einem mehrere Rotorblätter (4) aufweisenden Rotor, wobei die Rotorblätter (4) jeweils durch ein Großwälzlager, das gemäß einem der vorhergehenden Ansprüche ausgebildet ist, an einer Rotornabe des Rotors befestigt und in ihrem Pitchwinkel einstellbar sind.

## Claims

1. Large roller bearing (5) having at least two bearing rings (6, 7) that can be rotated with respect to one another, an actuating drive for adjusting the rotational position of the two bearing rings, at least one annular groove cylinder (12) that is formed in or at one of the bearing rings (6) and is interrupted at least once at the periphery and is provided at both sides of the interruption with a feed for hydraulic fluid, and at least one piston (13) that is displaceably received in the annular groove cylinder (12) and is drive-wise connected to the other one of the two bearing rings (7) via a driving disk (15) running around at least in the sealing gap of the annular groove cylinder (12), wherein the driving disk (15) and/or the connection of the driving disk (15) to the bearing ring (7) to be taken along is formed in the peripheral direction as substantially free of play and movable and/or yielding, in particular subject to play, in the axial and radial directions.

2. Large roller bearing in accordance with the preceding claim, wherein said connection has a pin connection with pins (15a) axially and/or radially displaceably guided at the bearing ring (7) to be taken along and/or at the driving ring (15) and/or a toothed arrangement having radial and/or axial play between the driving ring (15) and the bearing ring (7) to be taken along.

3. Large roller bearing in accordance with one of the preceding claims, wherein the annular groove cylinder (12) is arranged at the front face on an axial front face of one of the two bearing rings (6).

4. Large roller bearing in accordance with the preceding claim, wherein the annular groove cylinder body (12a, 12b) surrounding the annular groove cylinder (12) is formed in two parts or in multiple parts and the annular groove cylinder (12) has a dividing plane that is substantially in parallel with the trajectory of the at least one piston (13) and that passes approximately centrally through the annular groove viewed in cross-section.

5. Large roller bearing in accordance with the preceding claim, wherein one of the annular groove cylinder body parts (12a) is integrated in one of the two bearing rings (6) or is fastened to the bearing ring (6) as a separate ring.

6. Large roller bearing in accordance with one of the two preceding claims, wherein a further annular groove cylinder element part (12b) forms an additional, separate part in the form of an annular groove cover that is releasably connected to the bearing ring (6) and/or to the first-named annular groove part (12a), preferably via an additional screw connection.

7. Large roller bearing in accordance with one of the preceding claims, wherein the annular groove cylinder (12) is formed and is attached to the bearing ring (6) such that in the service case the annular groove cylinder (12) can be at least partly dismantled without releasing the bearing rings (6, 7) from one another and/or releasing the large roller bearing (5) from its installation environment.

8. Large roller bearing in accordance with one of the preceding claims, wherein the two bearing rings (6, 7) are supported against one another by at least two axial roller bearings (8, 9), wherein the two axial roller bearings (8, 9) are arranged, viewed in cross-section, at the same side of the annular groove cylinder (12).

9. Large roller bearing in accordance with the preceding claim, wherein the annular groove cylinder (12) and the axial bearings (8, 9) define mutually overlapping diameter regions.

10. Large roller bearing in accordance with one of the preceding claims, wherein the two bearing rings (6, 7) are supported against one another by at least one radial roller bearing (11).

11. Large roller bearing in accordance with the preceding claim, wherein the radial roller bearing (11) is arranged between the two axial roller bearings (8, 9).

12. Large roller bearing in accordance with one of the two preceding claims, wherein the radial roller bearing (11) is arranged in a diameter region that amounts to 75% to 125% of the diameter region of the annular groove (12).

13. Large roller bearing in accordance with one of the preceding claims, wherein the annular groove cylinder parts (12a, 12b) are sealed on one side of the annular groove cylinder (12) by a static seal (17) and are sealed on the other side of the annular groove cylinder (12) by a sliding seal against the driving ring (15) that is connected to the piston(s) (14), wherein the static seal (17) and/or the sliding seal (18) is/are formed as acting axially.

14. Large roller bearing in accordance with one of the preceding claims, wherein seals (19) for sealing the bearing gap between the two bearing rings (6, 7) in which the roller bearing rows (8, 9, 11) are seated are provided between the bearing rings (6, 7), with said annular groove cylinder (12) being arranged outside the bearing gap sealed by the seals(19) such that the annular groove cylinder (12) is accessible and can be dismantled without dismantling the seals (19).

15. Wind turbine comprising a rotor having a plurality of rotor blades (4), wherein the rotor blades (4) are each fastened to a rotor hub of the rotor by an actuating drive that is configured in accordance with one of the preceding claims and are adjustable with respect to their pitch angles.

## Revendications

1. Palier à roulement de grande dimension (5) avec au moins deux bagues de palier (6, 7) pouvant tourner l'une par rapport à l'autre, un entraînement de réglage pour ajuster la position de rotation desdites deux bagues de palier, au moins un cylindre de canal annulaire (12), qui est réalisé dans ou sur une des bagues de palier (6) et est interrompu au moins une fois en périphérie et est pourvu de part et d'autre de l'interruption d'une arrivée de liquide hydraulique, ainsi qu'au moins un piston (13), qui est logé de manière à pouvoir coulisser dans le cylindre de canal annulaire (12), **caractérisé en ce que** ledit piston (13) est relié en entraînement à l'autre des deux bagues de palier (7) par l'intermédiaire d'un disque d'entraînement (15) se déplaçant en périphérie au moins dans le fente étanche du cylindre de canal annulaire (12), dans lequel le disque d'entraînement (15) et/ou la liaison du disque d'entraînement (15) par rapport à la bague de palier (7) à entraîner sont réalisés sensiblement sans jeu dans la direction périphérique et de manière mobile et/ou avec souplesse, en particulier avec un jeu, dans la direction axiale et radiale.

2. Palier à roulement de grande dimension selon la revendication précédente, dans lequel ladite liaison présente une liaison par goujons avec des goujons (15a) guidés de manière à pouvoir coulisser axialement et/ou radialement sur la bague de palier (7) à entraîner et/ou sur le disque d'entraînement (15) et/ou une denture avec un jeu radial et/ou axial entre le disque d'entraînement (15) et la bague de palier (7) à entraîner.

3. Palier à roulement de grande dimension selon l'une quelconque des revendications précédentes, dans lequel le cylindre de canal annulaire (12) est disposé côté frontal sur un côté frontal axial d'une des deux bagues de palier (6).

4. Palier à roulement de grande dimension selon la revendication précédente, dans lequel le corps de cylindre de canal annulaire (12a, 12b) entourant le cylindre de canal annulaire (12) est réalisé en deux parties ou en plusieurs parties et le cylindre de canal annulaire (12) présente un plan de division de manière sensiblement parallèle par rapport à la trajectoire en périphérie de l'au moins un piston (13) qui, vu dans la section transversale, traverse à peu près au milieu le canal annulaire.

5. Palier à roulement de grande dimension selon la revendication précédente, dans lequel une des parties de corps de cylindre de canal annulaire (12a) est intégrée dans une des deux bagues de palier (6) ou est fixée en tant que bague séparée sur la bague de palier (6).

6. Palier à roulement de grande dimension selon l'une quelconque des deux revendications précédentes, dans lequel une autre partie de corps de cylindre de canal annulaire (12b) forme une partie séparée supplémentaire sous la forme d'un couvercle de canal annulaire, lequel est relié de manière amovible, de préférence par l'intermédiaire d'un vissage supplémentaire, à la bague de palier (6) et/ou à la partie de canal annulaire (12a) mentionnée en premier lieu.

7. Palier à roulement de grande dimension selon l'une quelconque des revendications précédentes, dans lequel le cylindre de canal annulaire (12) est réalisé de telle manière et est installé sur la bague de palier (6) de telle manière qu'en cas de maintenance, le cylindre de canal annulaire (12) peut être démonté au moins en partie sans détacher l'une de l'autre les bagues de palier (6, 7) et/ou sans détacher le palier à roulement de grande dimension (5) de son environnement de montage.

8. Palier à roulement de grande dimension selon l'une quelconque des revendications précédentes, dans lequel les deux bagues de palier (6, 7) prennent appui l'une contre l'autre par au moins deux paliers à roulement axiaux (8, 9), dans lequel vus dans la section transversale, les deux paliers à roulement axiaux (8, 9) sont disposés sur le même côté du cylindre de canal annulaire (12).

9. Palier à roulement de grande dimension selon la revendication précédente, dans lequel le cylindre de canal annulaire (12) et les paliers axiaux (8, 9) définissent des zones diamétrales se chevauchant les unes les autres.

10. Palier à roulement de grande dimension selon l'une quelconque des revendications précédentes, dans lequel les deux bagues de palier (6, 7) prennent appui l'une contre l'autre par au moins un palier à roulement radial (11).

11. Palier à roulement de grande dimension selon la revendication précédente, dans lequel le palier à roulement radial (11) est disposé entre les deux paliers à roulement axiaux (8, 9).

12. Palier à roulement de grande dimension selon l'une quelconque des deux revendications précédentes, dans lequel le palier à roulement radial (11) est disposé dans une zone diamétrale, qui va de 75 % à 125 % de la zone diamétrale du canal annulaire (12).

13. Palier à roulement de grande dimension selon l'une quelconque des revendications précédentes, dans lequel les parties de cylindre de canal annulaire (12a, 12b) sont étanchéifiées sur un côté du cylindre de canal annulaire (12) par un joint d'étanchéité statique (17) et sont étanchéifiées sur un autre côté du cylindre de canal annulaire (12) par un joint d'étanchéité glissant par rapport au disque d'entraînement (15), qui est relié au/aux piston/pistons (13), dans lequel le joint d'étanchéité statique (17) et/ou le joint d'étanchéité glissant (18) sont réalisés de manière à agir axialement.

14. Palier à roulement de grande dimension selon l'une quelconque des revendications précédentes, dans lequel des joints d'étanchéité (19) sont prévus entre les bagues de palier (6, 7) pour étanchéifier la fente de palier entre les deux bagues de palier (6, 7), dans laquelle les rangées de paliers à roulement (8, 9, 11) reposent, dans lequel ledit cylindre de canal annulaire (12) est disposé à l'extérieur de la fente de palier étanchéifiée par les joints d'étanchéité (19) de sorte que le cylindre de canal annulaire (12) est accessible et peut être démonté sans démontage des joints d'étanchéité (19).

15. Eolienne avec un rotor présentant plusieurs pales de rotor (4), dans laquelle les pales de rotor (4) sont fixées sur un moyeu de rotor du rotor respectivement par un palier à roulement de grande dimension, qui est réalisé selon l'une quelconque des revendications précédentes, et peuvent être réglées dans leur angle de pas.
